Europäisches Patentamt

European Patent Office

Office européen des brevets

(19)

(11) EP 0 857 760 A1

# (12) EUROPEAN PATENT APPLICATION

(43) Date of publication:
12.08.1998 Bulletin 1998/33

(51) Int Cl.⁶: $C08L\ 83/04$, $C08K\ 5/00$, $C08K\ 13/02$

(21) Application number: 98300852.5

(22) Date of filing: 05.02.1998

(84) Designated Contracting States:
AT BE CH DE DK ES FI FR GB GR IE IT LI LU MC
NL PT SE

(30) Priority: 05.02.1997 US 795009

(71) Applicant: GENERAL ELECTRIC COMPANY
Schenectady, NY 12345 (US)

(72) Inventors:
• Lin, Chiu-Sing
Schenectady, New York 12309 (US)

• Lucas, Gary Morgan
Scotia, New York 12302 (US)
• Fitzsimmons, Kimberly M.
Saratoga Springs, New York 12866 (US)

(74) Representative: Szary, Anne Catherine, Dr. et al
London Patent Operation,
GE International, Inc.,
Essex House,
12-13 Essex Street
London WC2R 3AA (GB)

(54) **Room temperature vulcanizable silicone compositions having a reduced stringiness**

(57)     The addition of a non-ionic surfactant, selected from a particular group of non-ionic surfactants, reduces the phenomenon of stringiness in room temperature vulcanizable silicone sealants to 3.5 inches or less. Stringiness is the tendency of a bead of sealant to thread out after the release of application pressure when the sealant is being applied.

EP 0 857 760 A1

Printed by Jouve, 75001 PARIS (FR)

## Description

The present invention relates to room temperature vulcanizable silicone sealant compositions that exhibit a reduced stringiness by comparison to conventional formulations. More particularly the present invention relates to such compositions that cure by condensation of acyloxy or alkoxy terminated polydiorganosiloxane polymers.

## Background of the Invention

Organopolysiloxane room temperature vulcanizable (RTV) compositions that are stored under anhydrous conditions will cure upon exposure to water or water vapor at room temperature to yield elastomers. These RTV compositions are prepared by mixing diorganopolysiloxanes having reactive end groups with organosilicon compounds that possess at least three hydrolyzably reactive moieties per molecule. The known RTV compositions are widely used as elastic sealing materials for applications involving the gaps between various joints such as the gaps between the joints of building materials, the joints between structural bodies and building materials in buildings, between the bathtub and wall or floor, cracks on tiles in bathrooms, gaps in the bathroom such as those around the washbasin and those between the washbasin supporting board and the wall, gaps around the kitchen sink and the vicinity, between panels in automobiles, railroad vehicles, airplanes, ships, gaps between prefabricated panels in various electric appliances, machines, and the like. Room temperature vulcanizable silicone sealants thus may be utilized in a wide variety of caulking and sealing applications.

As a caulking material these sealants are frequently filled with finely divided inorganic materials which may be either reinforcing or non-reinforcing. Reinforcing fillers may be fumed silica, precipitated silica, hydrophobicized precipitated silica, hydrophobicized fumed silica, carbon black, titanium dioxide, ferric oxide, aluminum oxide, and other metal oxides. Non-reinforcing fillers may be calcium carbonate, diatomaceous earth, calcium silicate, zirconium silicate, talc, and bentonite. Fibrous materials such as asbestos, glass fibers, or organic fibers are also useful fillers. The amount of filler used in an RTV composition is selected as desired so as to not interfere with the purposes of the instant invention.

When it is anticipated that these sealant materials will be exposed to conditions that will tend to degrade performance or appearance over a period of time, these sealants are frequently stabilized against such a deterioration by the addition of small quantities of protective additives such as UV stabilizers, anti-oxidants, fungicides, and the like. These additives tend to complement the physical property profile of the sealant by adding additional desirable properties, e. g. resistance to photocatalytic degradation, oxidation (flame retardants), and attack by fungi.

Various compounds have been added to the formulations of RTV sealants to improve performance with respect to one or another property. For example, U.S. patent 4,247,442 discloses and claims the incorporation of various benzimidazoles to reduce the growth of fungus and mildew on the surface of the sealants. Because the benzimidazole compounds are insoluble in water, the incorporation of benzimidazole compounds by themselves was not satisfactory. Incorporation of a small amount of an organic surfactant rendered the benzimidazole compounds wettable thereby enabling the functioning of the compounds as mildewcides and fungicides.

U.S. patent 4,304,897 discloses room temperature vulcanizable silicone sealants containing a silicone polyether copolymer. Such silicone polyether copolymers are added to the one component RTV compositions in order to reduce the flow properties of the uncured sealant when it is applied to a surface. When such a silicone polyether copolymer was used in the RTV composition, the flow of the silicone sealant after application was significantly decreased, as measured in a Boeing Flow Jig.

U. S. patent 5,162,407 discloses the use of fluorocarbon surfactants to reduce the tendency of the components of an RTV rubber to migrate and separate during the evaporative stage of curing. The utility of adding a fluorocarbon surfactant is particularly pronounced when the RTV is applied to a smooth, non-porous substrate such as glass. Thus, surfactants have been added to RTV compositions for a multiplicity of purposes and objectives.

A continuing problem with RTV sealant compositions is the tendency of the composition to form threads of silicone sealant during application even after application has stopped. While the silicone sealant extrudes from a caulking tube or other application device in a fairly uniform fashion while a delivery pressure is being applied, a cessation of the delivery force does not yield a clean cut off of the silicone bead formed by the application apparatus. The sealant has a tendency to string out from the nozzle of the delivery mechanism. This causes problems in appearance requiring extensive tooling to render the sealant bead both functional and attractive. More importantly, the string or thread that results after a delivery pressure has been stopped wastes silicone sealant. This problem, referred to hereafter as a stringiness problem is a continuing problem.

## Summary of the Invention

The present invention provides for a room temperature vulcanizable sealant composition comprising:

(A) an organopolysiloxane having the formula:

$$HO(RR'SiO)_xH$$

wherein R and R' are independently selected monovalent hydrocarbon radicals having from one to forty carbon atoms, where x has a value whereby the viscosity of the organopolysiloxane is about 500 to 200,000 centipoise at 25° C;

(B) an organosilicon compound having at least two hydrolyzable moieties per molecule or their partial hydrolysis products selected from the group of compounds having the formulas:

$R_aSi(ON=CR'_2)_{4-a}$, where R and R' are independently selected one to forty carbon atom monovalent hydrocarbon radicals, and a is 0, 1 or 2;

$R_aSi(OR')_{4-a}$, where R and R' are independently selected one to forty carbon atom monovalent hydrocarbon radicals, and a is 0, 1 or 2;

$R_aSi(OCR')_{4-a}$, where R and R' are independently selected one to forty carbon atom monovalent hydrocarbon radicals, and a is 0, 1 or 2;

$R_aSi(NR'R'')_{4-a}$, where R and R' are independently selected one to forty carbon atom monovalent hydrocarbon radicals, R" is hydrogen or the same as R, and a is 0, 1 or 2; and

$R_aSi(NR'''COR')_{4-a}$, where R and R' are independently selected one to forty carbon atom monovalent hydrocarbon radicals, R'" is an independently selected one to forty carbon atom monovalent hydrocarbon radical, and a is 0,1 or 2;

(C) a non-ionic surfactant compound selected from the group of surfactants consisting of polyethylene glycol, polypropylene glycol, ethoxylated castor oil, oleic acid ethoxylate, alkylphenol ethoxylates, copolymers of ethylene oxide (EO) and propylene oxide (PO) and silicone polyether copolymers;

(D) a reinforcing filler; and

(E) a condensation cure catalyst;

whereby stringiness is 3.5 inches or less.

The present invention also provides for a process for reducing the stringiness of room temperature vulcanizable silicone sealants comprising:

(a) preparing a room temperature vulcanizable silicone sealant composition and

(b) adding to said room temperature vulcanizable silicone sealant a surfactant;

whereby stringiness is 3.5 inches or less.

**Detailed Description of the Invention**

The present invention is based on the discovery that acetoxy, ketoximo, and alkoxy silicone sealants incorporating a particular class of surfactant compounds unexpectedly show reduced stringiness. The level of incorporation of the surfactant compounds ranges from about 0.10 percent by weight to about 3.00 percent by weight, more preferably from about 0.50 percent by weight to about 1.50 percent by weight, and most preferably from about 0.60 percent by weight to about 1.00 percent by weight of the total composition.

In general, one component RTV silicone sealants of the present invention comprise:

(A) an organopolysiloxane having the general formula

$$HO(RR'SiO)_xH$$

wherein R and R' are substituted or unsubstituted monovalent hydrocarbon radicals having from one to forty carbon atoms which may be identical or different, i.e. R and R' are independently selected, where x has a value such that the viscosity of the organopolysiloxane is about 500 to 200,000 centipoise at 25° C. A portion of the hydroxyl groups may be replaced by other reactive end groups or endstoppers such as organoketoxime groups, carboxyl groups, acetoxy groups, RNH-groups, (where R is as previously described), carbamoyl groups, alkoxy groups, alkylalkoxy groups, or arylalkoxygroups;

(B) an organosilicon compound having at least two hydrolyzable moieties per molecule or their partial hydrolysis products having variously the following formulae prior to partial hydrolysis:

$$R_aSi(ON=CR'_2)_{4-a},$$

$$R_aSi(OR')_{4-a},$$

$$R_aSi(OCOR')_{4-a}$$

where R and R' are the same as defined previously and may be independently selected for each compound, and a is 0, 1 or 2,

$$R_aSi(NR'R'')_{4-a}$$

where R and R' are the same as defined previously and may be independently selected, R" is hydrogen or the same as R, and a is 0, 1 or 2; or

$$R_aSi(NR'''COR')_{4-a}$$

where R and R' are the same as defined previously, R''' is a one to forty carbon atom monovalent hydrocarbon radical, R, R' and R''' may each be independently selected, and a is 0, 1 or 2. Preferably R, R' and R''' are selected from the group consisting of methyl, ethyl, n-propyl, i-propyl, trifluoropropyl, n-butyl, i-butyl, t-butyl, phenyl and tolyl.

Some non-limiting examples of these organosilicon compounds are: methyltrimethoxysilane, N-aminoethylaminopropyltriethoxysilane, methyltris(N,N-diethylaminoxy)silane, methyltris(methylethylketoximo)silane, methyltris(dimethylketoximo)silane, vinyltris(methylethylketoximo)silane, vinyltris(dimethylketoximo)silane, methyltriacetoxysilane, ethyltriacetoxysilane, vinyltriacetoxysilane, methyltris(N-butylamino)silane, and methyltris(cyclohexylamino)silane, methyltris(N-methylacetamido)silane.

The organosilicon compounds (B) are generally used in such an amount that at least one mole of the silicon compound exists per gram equivalent of the reactive end groups of the organopolysiloxane (A). More preferably, the organosilicon compound, (B), is generally used in an amount ranging from about 1 to about 15 parts by weight, most preferably (B) is used in amounts ranging from about 1 to about 10 parts by weight relative to component (A).

Component (C) comprises a non-ionic surfactant compound selected from the group of non-ionic surfactants consisting of polyethylene glycol, polypropylene glycol, ethoxylated castor oil, oleic acid ethoxylate, alkylphenol ethoxylates, copolymers of ethylene oxide (EO) and propylene oxide (PO) and copolymers of silicones and polyethers (silicone polyether copolymers) in an amount ranging from about 0.10 weight percent to about 4.00 weight percent based on the total amount of components (A) and (B), preferably an amount ranging from about 0.20 weight percent to about 3.00 weight percent based on the total amount of components (A) and (B), more preferably an amount ranging from about 0.70 weight percent to about 2.00 weight percent based on the total amount of components (A) and (B), and most preferably an amount ranging from about 0.80 weight percent to about 1.30 weight percent based on the total amount of components (A) and (B).

Component (D) may comprise a reinforcing filler or non-reinforcing filler or an appropriate mixture of both. Reinforcing fillers may be fumed silica, precipitated silica, hydrophobicized precipitated silica, hydrophobicized fumed silica, carbon black, titanium dioxide, ferric oxide, aluminum oxide, and other metal oxides. Non-reinforcing fillers may be calcium carbonate, diatomaceous earth, calcium silicate, zirconium silicate, talc, and bentonite. Fibrous materials such as asbestos, glass fibers, or organic fibers are also useful fillers. The amount of filler used in an RTV composition is selected as desired so as to not interfere with the purposes of the instant invention.

Component (E) comprises a condensation catalyst such as dialkyltincarboxylates, alkyl titanates, organosiloxy titanium compounds, and various other condensation catalysts known in the art.

Component (F) may comprise various additives such as pigments, dyes anti-oxidants, flame retardants, UV stabilizers, adhesion-enhancing agents, thermal stabilizing agents, mildewstats, fungicides, anti-microbials and the like in various combinations ranging from about 0.01% by weight of the sum of components (A) and (B) up to about 20% by weight

In referring to an acetoxy, ketoximo, or alkoxy silicon sealant, applicants define such as a sealant having the general composition previously defined where the end groups of the organopolysiloxane component (A) are acetoxy, ketoximo, or alkoxy groups, respectively. By alkoxy groups applicants define alkoxy to include both alkyl-, aryl- and alkylaryl-substituted alkoxy groups.

Stringiness is measured by utilizing a test jig holding a caulking cartridge at a standard 45° angle to a movable surface. The nozzle of the caulking cartridge is cut to a standardized 0.375" outside diameter. A small amount of sealant is extruded onto the movable surface, which is protected by a layer of parafilm. The movable surface is engaged at speed of 300 inches per minute and begins moving. When the tail of the bead of sealant breaks from the caulking cartridge the test is complete. Stringiness is defined as the length traveled when the sealant bead breaks off from the caulking cartridge as measured from the base of the applied bead to the break. Shorter travel lengths of the sealant bead indicate reduced stringiness. As shown in the appended examples, an acceptable stringiness measurement is 3.5 inches or less.

All U. S. patents referenced herein are herewith and hereby explicitly incorporated by reference. When the chemical term alkyl is used generically as in alkyl phenol, the term is intended to mean monovalent hydrocarbon radicals containing from one to about forty carbon atoms which may be saturated or unsaturated and which may also contain substituent aromatic groups.

The following examples of the instant invention are illustrative only and are not to be construed as limitations upon the appended claims. The comparative examples are presented among other purposes for the purpose of demonstrating the unexpected nature of the results.

## Experimental

### Example 1:

This experiment demonstrates the effectiveness of the addition of 1.5 weight percent of a silicone polyether surfactant in an acetoxy sealant formulation for reducing stringiness. The two sealant formulations differed only in that 1.5 weight percent of a silicone polyether surfactant was added to the second formulation. The sealant composition was 72.74 weight percent dimethyl silicone oil, 6.00 weight percent dimethyl polysiloxane fluid, 8.87 weight percent fumed or pyrogenic silica, 0.10 weight percent aluminum stearate and 4.00 weight percent of a catalyst solution. The catalyst solution consisted of the following components: 72.2664 weight percent methyltriacetoxysilane, 27.1371 weight percent of ditertiary-butoxydiacetoxysilane and 0.5964 weight percent of dibutyl tin dilaurate. The sealants were tested for physical properties after curing for 7 days at 75°C and 50 percent relative humidity. The processing and physical properties of the control and the control plus the non-ionic surfactant are set forth in Table 1.

Table 1:

| Reduced Stringiness with Incorporation of Silicone Polyether Surfactant | | |
|---|---|---|
| Measurement | Control | Control plus 1.5 wt.% Surfactant |
| Application Rate, g/min. | 265 | 215 |
| Tack Free Time, min. | 13 | 11 |
| Boeing Flow, in. | 0.10 | 0.05 |
| Shore A Hardness | 20 | 21 |
| Tensile, psi | 230 | 455 |
| % Elongation | 470 | 670 |
| Modulus at 100%, psi | 60 | 75 |
| Stringiness, in. | >5 | 1.5 |
| Heat Aged Properties, 24 Hr. At 100 °C | | |
| Shore A Hardness | 19 | 22 |
| Tensile, psi | 260 | 300 |
| % Elongation | 490 | 495 |
| Modulus at 100%, psi | 60 | 70 |
| Peel Adhesion Properties C628 | | |
| Glass, lbs. Pull | 28 | 32 |
| % Cohesive Failure | 100 | 100 |

Table 1: (continued)

| Reduced Stringiness with Incorporation of Silicone Polyether Surfactant | | |
|---|---|---|
| Measurement | Control | Control plus 1.5 wt.% Surfactant |
| Peel Adhesion Properties C628 | | |
| Alclad Aluminum, lbs. Pull | 24 | 28 |
| % Cohesive Failure | 100 | 100 |
| Mill Finished Aluminum, lbs. Pull | 17 | 30 |
| % Cohesive Failure | 100 | 100 |
| Anodized Alumium, lbs. Pull | 24 | 35 |
| % Cohesive Failure | 100 | 100 |

**Example 2:**

This experiment demonstrates the effectiveness of the addition of 1.0 weight percent of a silicone polyether surfactant in an acetoxy sealant formulation for reducing stringiness. The two sealant formulations differed only in that 1.0 weight percent of a silicone polyether surfactant was added to the second formulation. The sealant composition was 72.74 weight percent dimethyl silicone oil, 6.00 weight percent dimethyl polysiloxane fluid, 8.87 weight percent fumed or pyrogenic silica, 0.10 weight percent aluminum stearate and 4.00 weight percent of a catalyst solution. The catalyst solution consisted of the following components: 72.2664 weight percent methyltriacetoxysilane, 27.1371 weight percent of ditertiary-butoxydiacetoxysilane and 0.5964 weight percent of dibutyl tin dilaurate. The sealants were tested for physical properties after curing for 7 days at 75°C and 50 percent relative humidity. The processing and physical properties of the control and the control plus the surfactant are set forth in Table 2.

Table 2:

| Reduced Stringiness with Incorporation of Silicone Polyether Surfactant | | |
|---|---|---|
| Measurement | Control | Control plus 1.0 wt% Surfactant |
| Application Rate, g/min. | 240 | 145 |
| Tack Free Time, min. | 18 | 18 |
| Boeing Flow, in. | 0.10 | 0.05 |
| Shore A Hardness | 17 | 16 |
| Tensile, psi | 250 | 200 |
| % Elongation | 515 | 460 |
| Modulus at 100%, psi | 60 | 55 |
| Stringiness, in. | >5 | 2.5 |
| Heat Aged Properties, 168 Hr. At 50 °C | | |
| Shore A Hardness | 14 | 14 |
| Tensile, psi | 215 | 215 |
| % Elongation | 550 | 545 |
| Modulus at 100%, psi | 50 | 50 |

**Example 3:**

This experiment demonstrates the effectiveness of the addition of 1.0 weight percent of polyethylene glycol surfactant in an acetoxy sealant formulation that also contains an organic plasticizer for reducing stringiness. The two sealant formulations differed only in that 1.0 weight percent of a polyethylene glycol surfactant was added to the second formulation. The sealant composition was 72.00 weight percent dimethyl silicone, 14.80 weight percent polybutene polymer, 8.90 weight percent fumed or pyrogenic silica, 0.10 weight percent aluminum stearate, 0.2 weight percent polypropylene glycol and 4.00 weight percent of a catalyst solution. The catalyst solution consisted of the following components: 72.2664 weight percent methyltriacetoxysilane, 27.1371 weight percent of di-tertiary-butoxydiacetoxysilane and 0.5964 weight percent of dibutyl tin dilaurate. The sealants were tested for physical properties after curing for 7 days at 75°C and 50 percent relative humidity. The processing and physical properties of the control and the control plus the surfactant are set forth in Table 3.

Table 3:

| Reduced Stringiness with Incorporation of Polyethylene Glycol Surfactant | | |
|---|---|---|
| Measurement | Control | Control plus 1.0 wt.% Surfactant |
| Application Rate, g/min. | 462 | 423 |
| Tack Free Time, min. | 16 | 17 |
| Boeing Flow, in. | 0.10 | 0.10 |
| Shore A Hardness | 23 | 22 |
| Tensile, psi | 160 | 205 |
| % Elongation | 285 | 345 |
| Modulus at 100%, psi | 70 | 70 |
| Stringiness, in. | 4.5 | 1.25 |
| Heat Aged Properties, 168 Hr. At 50 °C | | |
| Shore A Hardness | 18 | 12 |
| Tensile, psi | 185 | 185 |
| % Elongation | 370 | 450 |
| Modulus at 100%, psi | 60 | 45 |

**Example 4:**

Using a 30mm Werner-Pfleiderer (WP) twin screw extruder, a methoxy curing 1-part, surfactant free, RTV composition, referred to as "composition 1" was produced as follows:

**RTV COMPOSITION 1:**

(1) 100 parts by weight of an alpha, omega-methyldimethoxy terminated PDMS polymer having a viscosity of 125,000 cps;

(2) 18.8 parts by weight of a D4 treated, reinforcing fumed silica filler;

(3) 20.6 parts by weight of an alpha, omega-trimethylsilyl terminated PDMS fluid having a viscosity of 100 cps ;

(4) 10.2 parts by weight of a 50 centipoise "M,D,T" silanol fluid;

(5) 3.1 parts by weight of hexamethyldisilazane hydroxy/methanol scavenger;

(6) 0.8 parts by weight of methyltrimethoxysilane crosslinker;

(7) 1.6 parts by weight aminoethylaminopropyltrimethoxysilane adhesion promoter; and

(8) 0.23 parts by weight of a 1:1 molar ratio of dibutyltin diacetate and dibutyltin dilaurate.

Sections 1-10 of the extruder were heated to 75 °F. Extruder sections 11-14 were cooled with 0 °F glycol coolant. To WP barrel 1, there was continuously metered in alpha, omega-methyldimethoxy terminated PDMS polymer having a viscosity of 125,000 cps and D4 treated, reinforcing fumed silica filler. To WP barrel 6, there was continuously metered in alpha, omega-trimethylsilyl terminated PDMS fluid having a viscosity of 100 centipoise at 25 °C, 50 centipoise "M, D,T" silanol fluid, hexamethyldisilazane hydroxy/methanol scavenger, methyltrimethoxysilane crosslinker, aminoethylaminopropyltrimethoxysilane adhesion promoter, and a solution of a 1:1 molar ratio of dibutyltin diacetate and dibutyltin dilaurate. A 6 mm Hg de-airing vacuum was applied at WP barrel 11. RTV sealant was produced at a rate of 40 lb./hr at a WP exit temperature of 25-35 °C.

Twenty-four hours after production, composition 1 was tested for degree of stringiness and application rate. Results are shown in table 4. Acceptable stringiness value is 3.5 inch maximum. Acceptable application rate value is 120 gm/min minimum.

**Example 5:**

Non-ionic surfactant containing RTV compositions were prepared using the same base RTV formulation and continuous WP mixing procedure as described in example 1. Composition 1 type RTV sealants were prepared containing 1.0 parts by weight, per 100 parts by weight alpha, omega-methyldimethoxy terminated PDMS polymer described in example 4, of the of the following commercial non-ionic surfactants:

| RTV | Non-ionic surfactant Type | | Source |
|---|---|---|---|
| **Composition No.** | | | |
| 2 | SF 1023 | Silicone Polyether Copolymer (SPEC) | GE Silicones |
| 3 | SF 1550 | SPEC | GE Silicones |
| 4 | SF 1288 | SPEC | Ge Silicones |
| 5 | Pluriol E-200 | Polyethylene Glycol (PEG) | BASF |
| 6 | Pluriol E-300 | PEG | BASF |
| 7 | Pluriol E-400 | PEG | BASF |
| 8 | Pluriol E-600 | PEG | BASF |
| 9 | Pluriol P-600 | PEG | BASF |
| 10 | Pluriol P-900 | PEG | BASF |
| 11 | Pluriol P-2000 | PEG | BASF |
| 12 | Pluriol P-4000 | PEG | BASF |
| 13 | Pluronic 25R2 | Ethylene oxide propylene oxide block copolymer (EO-PO) | BASF |
| 14 | Pluronic 31R1 | EO-PO | BASF |
| 15 | Pluronic L44 | EO-PO | BASF |
| 16 | Pluronic L62 | EO-PO | BASF |
| 17 | Pluronic L64 | EO-PO | BASF |
| 18 | Pluronic L92 | EO-PO | BASF |
| 19 | Pluronic L101 | EO-PO | BASF |
| 20 | Pluracol P410 | Unknown Non-ionic (UNI) | BASF |
| 21 | Pluracol 628 | UNI | BASF |
| 22 | Pluracol 710 | UNI | BASF |
| 23 | Pluracol 735 | UNI | BASF |
| 24 | Pluracol 975 | UNI | BASF |
| 25 | Pluracol P1010 | UNI | BASF |
| 26 | Pluracol 1250D | UNI | BASF |
| 27 | Pluracol 4000D | UNI | BASF |
| 28 | Pluracol W5100N | Polyalkoxy polyether | BASF |
| 29 | Pluracol | PEG | BASF |
| 30 | Pluracol | PEG | BASF |
| 31 | Pluracol | PEG | BASF |
| 32 | Pluracol | PEG | BASF |
| 33 | Pluracol | PEG | BASF |
| 34 | Iconol TDA-9 | Tridecyl alcohol ethoxylate | BASF |
| 35 | Iconol OP-10 | Octylphenol ethoxylate | BASF |
| 36 | Tetronic 304 | ethylene propylene oxide ethylene diamine block copolymer | BASF |
| 37 | Polytergent SLF-18 | UNI | Olin |
| 38 | Polytergent SL-22 | UNI | Olin |
| 39 | Polytergent SL-62 | UNI | Olin |
| 40 | Polytergent P-17-A | UNI | Olin |
| 41 | Colorsperse 188A | Dioleate | Henkel |
| 42 | Emulan A | UNI | BASF |
| 43 | Emulan EL | UNI | BASF |
| 44 | Emulan OK5 | Ethoxylated fatty alcohol | BASF |
| 45 | Emulan ELP | Ethoxylated castor oil | BASF |
| 46 | Emulan PO | Alkylphenol ethoxylate | BASF |
| 47 | Liponic EGI | Ethoxylated glycerin | LIPO |
| 48 | Liponic EG7 | Ethoxylated glycerin | LIPO |
| 49 | Liponate GC | Caprylic-capric triglyceride | LIPO |

(continued)

| RTV | Non-ionic surfactant Type | | Source |
|---|---|---|---|
| **Composition No.** | | | |
| 50 | Liponate PC | Propylene glycol dicaprylate | LIPO |
| 51 | Lipocal L4 | Polyoxyethylene ether | LIPO |
| 52 | Ucon LB65 | Ethylene oxide propylene oxide polyglycol (EO-PO-PG) | Union Carbide |
| 53 | Ucon LB135 | EO-PO-PG | Union Carbide |
| 54 | Ucon LB285 | EO-PO-PG | Union Carbide |
| 55 | Triton X-100 | Ethylene oxide glycol | Union Carbide |

24 hours after production, composition 2-55 were tested for degree of stringiness (First Impression quality Stringiness Test #2- attachment). Results are shown in Table 4.

**Example 6:**

Example 4 was repeated with the addition of 0.80 parts by weight silicone polyether copolymer surfactant, per 100 parts by weight alpha, omega-methyldimethoxy terminated PDMS polymer described in example 4, (composition #56). Stringiness testing results are shown in table 1.

**Example 7:**

Example 4 was repeated with the addition of 0.40 parts by weight silicone polyether copolymer surfactant, per 100 parts by weight alpha, omega-methyldimethoxy terminated PDMS polymer described in example 4, (composition #57). Stringiness testing results are shown in table 4.

**Example 8:**

Example 4 was repeated with the addition of 1.7 parts by weight silicone polyether copolymer surfactant, per 100 parts by weight alpha, omega-methyldimethoxy terminated PDMS polymer described in example 4, (composition #58). Stringiness testing results are shown in table 4.

**Example 9:**

Example 4 was repeated with the addition of 0.40 parts by weight Pluriol E200 surfactant, per 100 parts by weight alpha, omega-methyldimethoxy terminated PDMS polymer described in example 4, (composition #59). Stringiness testing results are shown in table 4.

**Example 10:**

Example 4 was repeated with the addition of .80 parts by weight Pluriol E200 surfactant, per 100 parts by weight alpha, omega-methyldimethoxy terminated PDMS polymer described in example4, (composition #60). Stringiness testing-results are shown in table 4.

**Example 11:**

Example 4 was repeated with the addition of 1.70 parts by weight Pluriol E200 surfactant, per 100 parts by weight alpha, omega-methyldimethoxy terminated PDMS polymer described in example 4, (composition #61). Stringiness testing results are shown in table 4.

TABLE 4:

| RTV SURFACTANT EVALUATION | | |
|---|---|---|
| RTV Composition # | Stringiness, inch | Application Rate, Rm/min |
| 1 | 8.5 | 294 |
| 2 | 4.5 | 265 |

TABLE 4: (continued)

| RTV SURFACTANT EVALUATION | | |
|---|---|---|
| **RTV Composition #** | **Stringiness, inch** | **Application Rate, Rm/min** |
| 3 | 3.5 | 219 |
| 4 | 2.0 | 145 |
| 5 | 1.0 | 138 |
| 6 | 2.0 | 162 |
| 7 | 4.0 | 198 |
| 8 | 5.0 | 215 |
| 9 | 4.5 | 207 |
| 10 | 4.0 | 219 |
| 11 | 4.0 | 223 |
| 12 | 4.5 | 201 |
| 13 | 4.5 | 233 |
| 14 | 4.5 | 217 |
| 15 | 4.0 | 228 |
| 16 | 1.5 | 204 |
| 17 | 3.0 | 235 |
| 18 | 3.0 | 191 |
| 19 | 2.5 | 168 |
| 20 | 5.5 | 241 |
| 21 | 2.5 | 198 |
| 22 | 4.5 | 249 |
| 23 | 0.0 | 84 |
| 24 | 4.5 | 202 |
| 25 | 3.5 | 183 |
| 26 | 2.5 | 168 |
| 27 | 4.0 | 219 |
| 28 | 4.0 | 229 |
| 29 | 1.5 | 138 |
| 30 | 1.5 | 144 |
| 31 | 2.0 | 156 |
| 32 | 2.5 | 156 |
| 33 | 3.5 | 185 |
| 34 | 3.5 | 162 |
| 35 | 4.0 | 172 |
| 36 | 1.5 | 138 |
| 37 | 4.5 | 209 |
| 38 | 4.5 | 211 |
| 39 | 4.5 | 235 |
| 40 | 4.5 | 213 |
| 41 | 4.5 | 239 |
| 42 | 4.5 | 220 |
| 43 | 5.0 | 241 |
| 44 | 6.0 | 229 |
| 45 | 3.0 | 171 |
| 46 | 3.5 | 182 |
| 47 | 2.0 | 162 |
| 48 | 1.0 | 114 |
| 49 | 2.0 | 174 |
| 50 | 5.5 | 214 |

TABLE 4:   (continued)

| RTV SURFACTANT EVALUATION | | |
|---|---|---|
| **RTV Composition #** | **Stringiness, inch** | **Application Rate, Rm/min** |
| 51 | 4.0 | 199 |
| 52 | 4.5 | 189 |
| 53 | 5.5 | 238 |
| 54 | 3.5 | 169 |
| 55 | 4.5 | 197 |
| 56 | 2.5 | 162 |
| 57 | 4.5 | 246 |
| 58 | 1.5 | 126 |
| 59 | 3.5 | 188 |
| 60 | 2.5 | 144 |
| 61 | 2.5 | 126 |

The results shown in Table 4 demonstrate that a significant portion of the surfactants tested do not produce a stringiness measurement of 3.5 inches or less. Therefore not all non-ionic surfactants work to produce a reduction in stringiness of the room temperature vulcanizable sealants prepared and tested. Since only some of the non-ionic surfactants succeed in reducing stringiness, the reduction in stringiness by these surfactants is necessarily unexpected. Additional experiments demonstrated that cationic as well as anionic surfactants interfered with the cure mechanism an therefore these types of surfactants are unsuitable for reducing stringiness.

**Claims**

1.   A room temperature vulcanizable sealant composition comprising:

(A) an organopolysiloxane having the formula:

$$HO(RR'SiO)_xH$$

wherein R and R' are independently selected monovalent hydrocarbon radicals having from one to forty carbon atoms, where x has a value whereby the viscosity of the organopolysiloxane is about 500 to 200,000 centipoise at 25° C;
(B) an organosilicon compound having at least two hydrolyzable moieties per molecule or their partial hydrolysis products selected from the group of compounds having the formulas:

$R_aSi(ON=CR'_2)_{4-a}$, where R and R' are independently selected one to forty carbon atom monovalent hydrocarbon radicals, and a is 0, 1 or 2;
$R_aSi(OR')_{4-a}$, where R and R' are independently selected one to forty carbon atom monovalent hydrocarbon radicals, and a is 0, 1 or 2;
$R_aSi(OCOR')_{4-a}$, where R and R' are independently selected one to forty carbon atom monovalent hydrocarbon radicals, and a is 0, 1 or 2;
$R_aSi(NR'R'')_{4-a}$, where R and R' are independently selected one to forty carbon atom monovalent hydrocarbon radicals, R" is hydrogen or the same as R, and a is 0, 1 or 2; and
$R_aSi(NR'''COR')_{4-a}$, where R and R' are independently selected one to forty carbon atom monovalent hydrocarbon radicals, R''' is an independently selected one to forty carbon atom monovalent hydrocarbon radical, and a is 0, 1 or 2;

(C) a non-ionic surfactant compound selected from the group of non-ionic surfactants consisting of polyethylene glycol, polypropylene glycol, ethoxylated castor oil, oleic acid ethoxylate, alkylphenol ethoxylates, copolymers of ethylene oxide (EO) and propylene oxide (PO) and silicone polyether copolymers;
(D) a reinforcing filler; and
(E) a condensation cure catalyst;

whereby stringiness is 3.5 inches or less

2. The composition of claim 1 wherein (C) is polyethylene glycol or a silicone polyether copolymer.

3. The composition of claim 1 or claim 2 wherein (B) is $R_aSi(OR')_{4-a}$.

4. The composition of claim 1 or claim 2 wherein (B) is $R_aSi(OCOR')_{4-a}$.

5. The composition of any preceding claim wherein R and R' are independently selected from the group consisting of methyl, ethyl, n-propyl, i-propyl, trifluoropropyl, n-butyl, i-butyl, t-butyl, phenyl and tolyl.

6. The composition of any one of claims 1 to 5 wherein a is zero.

7. The composition of any one of claims 1 to 5 wherein a is one.

8. The composition of any one of claims 1 to 5 wherein a is two.

9. A process for reducing the stringiness of room temperature vulcanizable silicone sealants comprising:

(a) preparing a room temperature vulcanizable silicone sealant composition and
(b) adding to said room temperature vulcanizable silicone sealant a non-ionic surfactant;

whereby stringiness is 3.5 inches or less.

10. The process of claim 9 wherein said non-ionic surfactant is selected from the group consisting of polyethylene glycol, polypropylene glycol, ethoxylated castor oil, oleic acid ethoxylate, alkylphenol ethoxylates, copolymers of ethylene oxide (EO) and propylene oxide (PO) and silicone polyether copolymers.

**European Patent Office**

## EUROPEAN SEARCH REPORT

Application Number

EP 98 30 0852

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 372 347 A (GEN ELECTRIC) 13 June 1990<br>* claims 1,2 *<br>* page 10, line 4 – line 19 *<br>--- | 1 | C08L83/04<br>C08K5/00<br>C08K13/02 |
| A | EP 0 106 363 A (TORAY SILICONE CO) 25 April 1984<br>* claims 1,4,5 *<br>* page 10, line 27 – page 11, line 4 *<br>--- | 1 | |
| A | PATENT ABSTRACTS OF JAPAN<br>vol. 012, no. 491 (C-554), 21 December 1988<br>& JP 63 202657 A (YOKOHAMA RUBBER CO LTD:THE;OTHERS: 01), 22 August 1988,<br>* abstract *<br>--- | 1 | |
| A | PATENT ABSTRACTS OF JAPAN<br>vol. 017, no. 291 (C-1067), 4 June 1993<br>& JP 05 017731 A (SEKISUI CHEM CO LTD), 26 January 1993,<br>* abstract *<br>--- | 1 | **TECHNICAL FIELDS SEARCHED (Int.Cl.6)** |
| P,A | PATENT ABSTRACTS OF JAPAN<br>vol. 097, no. 009, 30 September 1997<br>& JP 09 118827 A (SHIN ETSU CHEM CO LTD), 6 May 1997,<br>* abstract *<br>--- | 1 | C08L<br>C08K |
| P,A | PATENT ABSTRACTS OF JAPAN<br>vol. 097, no. 011, 28 November 1997<br>& JP 09 176490 A (SHIN ETSU CHEM CO LTD), 8 July 1997,<br>* abstract *<br>----- | 1 | |

The present search report has been drawn up for all claims

| Place of search | Date of completion of the search | Examiner |
|---|---|---|
| THE HAGUE | 8 June 1998 | Depijper, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)